# EUROPÄISCHE PATENTSCHRIFT

(11) **EP 0 960 915 B1**
(45) Veröffentlichungstag und Bekanntmachung des Hinweises auf die Patenterteilung: **07.09.2005**
(21) Anmeldenummer: 99109910.2
(22) Anmeldetag: 20.05.1999
(51) Int. Cl.: C09D 7/12, C09D 11/02, C09C 1/00, C08K 13/00

(54) **Pigmentzubereitung und deren Verwendung insbesondere in Druckfarben**
Pigment composition and use in printing inks
Composition pigmentaire et son utilisation dans des encres d'imprimerie

(30) Priorität: 28.05.1998 DE 19823865
(43) Veröffentlichungstag der Anmeldung: 01.12.1999
(73) Patentinhaber: Merck Patent GmbH, 64293 Darmstadt (DE)
(72) Erfinder: Vogt, Reiner Dr., 64289 Kranichstein (DE); Herget, Gerhard Dr., 64372 Ober-Ramstadt (DE); Schül, Norbert, 64646 Heppenheim (DE); Schoen, Sabine Dr., 64287 Darmstadt (DE); Osterried, Karl Dr., 64807 Dieburg (DE)

(56) Entgegenhaltungen:
- EP-A- 0 632 109
- EP-A- 0 633 299
- DE-A- 2 903 212

## Beschreibung

Die vorliegende Erfindung betrifft eine Pigmentzubereitung im wesentlichen bestehend aus beschichteten und/oder unbeschichteten SiO₂-Flakes, ein oder mehreren Effektpigmenten und einem Phosphatderivat, sowie deren Verwendung, insbesondere in Druckfarben.

Druckfarben bestehen in der Regel aus Bindemittel, Pigmenten oder Farbstoffen und Additiven. Bei Druckerzeugnissen für Verpackungsdrucke, Etiketten und hochwertige Zeitschriften tritt immer häufiger die Forderung auf den abgebildeten Gegenständen einen Glanz zu verleihen.

Glanzpigmente enthaltende Druckfarben zeigen alle den Nachteil, daß sie Probleme mit der Fortdruckstabilität aufweisen. Sie neigen dazu auf Farbwerk, Druckplatte und Gummituch schnell aufzubauen oder zu sedimentieren, so daß ein problemloser Fortdruck über 10000 Bögen in der Regel nicht möglich ist. Ein grundsätzliches Problem ist die starke Neigung von Glanzpigmenten, insbesondere Perlglanzpigmenten, bedingt durch die plättchenförmige Struktur sowie der speziellen chemisch/physikalischen Oberflächeneigenschaften zur Bildung von Agglomeraten in der Druckfarbe, wobei die Pigmente stapelförmig aufeinanderliegen und aufgrund von starker Adhäsion nur schwer zu separieren sind. Weiterhin ist die Glanzgebung solcher Andrucke in der Regel nicht zufriedenstellend, was auf die unzureichende Menge an übertragenden Pigmenten auf das Druckerzeugnis zurückzuführen ist. Die Farbe verarmt auf dem Transportweg über Farbwerk, Platte und Gummituch an Pigment. Letzteres reichert sich an exponierten Stellen auf Platte und Tuch an und führt zum Aufbauen und Pelzen.

In der Regel kommen nur Effektpigmente mit einer sehr kleinen mittleren Teilchengröße in Frage, da die Teilchengröße kritisch ist für die Pigmentübertragung beim Druck. Solche Pigmente existieren nur für perlweiße und pastell abgetönte Farbgebungen, nicht aber für die sehr interessanten Gold-, Silber-, Bronze- und Kupfertöne. Bisher konnten im Offset-Verfahren solche Farbtöne mit Effektpigmenten häufig nicht zufriedenstellend erzeugt werden.

Der Einsatz von plättchenförmigen Wismutoxichloridpigmenten zur Erzielung eines Perlglanzeffekts führt ebenfalls nicht zu befriedigenden Ergebnissen, da die Pigmentteilchen sehr empfindlich gegen mechanische Scherkräfte sind und im Farbspalt zermahlen werden.

Die Verwendung von Perlglanzpigmenten in Druckfarben für den Offsetdruck ist aus der DE 29 03 212 bekannt, wo die Pigmentierung von einem handelsüblichen Öldrucklack mit einem vorzugsweise sehr feinteiligen Perlglanzpigment offenbart wird. Die dort beschriebene Offset-Drucklack-Zubereitung zeichnet sich dadurch aus, daß der Anteil an Perlglanzpigmenten sehr hoch ist, wobei die Obergrenze der Pigmentkonzentration in der Suspension im wesentlichen nur durch die zu fordernde Fließfähigkeit des Gemisches begrenzt ist. Der Anteil an Perlglanzpigmenten liegt dabei im Bereich bis 65 Gew.%. Lacke mit einem derart hohen Pigmentanteil sind sehr viskos und müssen gegebenenfalls mit einem Verdünner fließfähiger gemacht werden um in herkömmlichen Offset-Druckmaschinen verarbeitbar zu sein. Im Gegensatz zur bisherigen Lehre haben Versuche in DE 29 03 212 gezeigt, daß bei solch hohen Pigmentierungen die Pigmentübertragung vom Farbwerk auf das Substrat gestört ist. Es treten Fortdruckstörungen wie Aufbauen und Pelzen auf, d.h., daß der erreichbare Perlglanzeffekt allein durch eine hohe Pigmentierung nicht optimiert werden kann. Weiterhin zeigen die Farbsysteme gemäß der DE 29 03 212 in der Regel eine nicht ausreichende Punktschärfe, so daß die dort beschriebenen Farbsysteme im wesentlichen auf den Druck von Volltonflächen beschränkt sind.

Es bestand daher die Aufgabe eine Pigmentzubereitung, insbesondere für Druckfarben, zu finden, die zum einen eine höhere Pigmentierung der Druckfarbe als auch zufriedenstellende Fortdruckeigenschaften erzielt.

Überraschenderweise wurde gefunden, daß die Güte des Glanzeffektes sowie die Menge an übertragenen Pigmentteilchen in einer Druckfarbe optimal wird, wenn man eine Pigmentzubereitung verwendet, die im wesentlichen aus einem Gemisch bestehend aus unbeschichteten oder mit ein oder mehreren Metalloxiden beschichteten SiO₂-Flakes und mindestens einem weiteren Effektpigment und einem Phosphatderivat besteht.

Gegenstand der Erfindung ist somit eine Pigmentzubereitung im wesentlichen bestehend aus unbeschichteten oder mit ein oder mehreren Metalloxiden beschichteten SiO₂-Flakes, mindestens einem weiteren Effektpigment und einem Phosphatderivat.

Wichtigster Bestandteil der erfindungsgemäßen Pigmentzubereitung sind die SiO₂-Flakes, wie sie z.B. in der WO 92/02351 beschrieben werden. Die nach der WO 93/08237 auf einem endlosen Band hergestellten SiO₂-Flakes basieren auf einer plättchenförmigen, transparenten, farbigen oder farblosen Matrix und besitzen in der Regel eine Dicke zwischen 0,1 und 5 µm, insbesondere zwischen 0,2 und 2,0 µm. Die Ausdehnung in den beiden anderen Dimensionen beträgt üblicherweise zwischen 1 und 250 µm, vorzugsweise zwischen 2 und 100 µm und insbesondere zwischen 5 und 40 µm. Die SiO₂-Flakes können mit einer oder mehreren Metallschichten und/oder Metalloxidschichten belegt werden. Geeignete Metalloxide oder Metalloxidgemische sind beispielsweise Titandioxid, Zirkonoxid, Zinkoxid, Eisenoxide und/oder Chromoxid, insbesondere TiO₂ und/oder Fe₂O₃. Die unbeschichteten SiO₂-Flakes können in der Matrix ein Farbmittet enthalten, z.B. ein farbgebendes Metalloxid oder einen organischen Farbstoff. Die Beschichtung der SiO₂-Flakes kann z.B. erfolgen wie in der WO 93/08207 (naßchemische Beschichtung) oder der DE-OS 196 14 637 (CVD-Verfahren) beschrieben.

Anstelle der äußeren Metalloxidschicht kann auch eine semitransparente Schicht eines Metalls verwendet werden. Geeignete Metalle dafür sind beispielsweise Cr, Ti, Mo, W, Al, Cu, Ag, Au oder Ni. Bevorzugte Pigmente weisen folgenden Schichtaufbau auf: SiO₂-Flakes + Metall + SiO₂ + Metalloxid.

Zur Erzielung spezieller Farbeffekte können in die hoch- bzw. niedrigbrechenden Metalloxidschichten zusätzlich noch feinteilige Partikel im Nanometergrößenbereich eingebracht werden. Als geeignet dafür erweisen sich beispielsweise feinteiliges TiO₂ oder feinteiliger Kohlenstoff (Ruß) mit Teilchengrößen im Bereich von 10 - 250 nm. Durch die lichtstreuenden Eigenschaften derartiger Partikel kann gezielt auf Glanz und Deckvermögen Einfluß genommen werden. Vorzugsweise sind die SiO₂-Flakes mit ein oder mehreren Metalloxiden beschichtet.

Als Effektpigment werden vorzugsweise handelsübliche Metalleffektpigmente, wie plättchenförmiges Eisenoxid, Aluminiumplättchen, z.B. Stapa-Alupaste® oder Standart® von Fa. Eckart, Effektpigmente, wie z.B. Paliochrom® von der BASF, sowie Perlglanzpigmente - mit Metalloxiden beschichtete Glimmerschuppenpigmente - erhältlich z.B. von der Fa. Merck KGaA, Darmstadt, unter dem Handelsnamen Iriodin® verwendet. Letztere sind z.B. bekannt aus den deutschen Patenten und Patentanmeldungen 14 67 468, 19 59 998, 20 09 566, 22 14 545, 22 15 191, 22 44 298, 23 13 331, 25 22 572, 31 37 808, 31 37 809, 31 51 343, 31 51 354, 31 51 355, 32 11 602 und 32 53 017. Vorzugsweise werden für die Druckfarbe Perlglanzpigmente verwendet. Insbesondere werden mit TiO₂ und/oder Fe₂O₃ beschichtete Glimmerpigmente, Glasflakes, Keramikflakes oder synthetische, trägerfreie Plättchen eingesetzt.

Die Pigmentzubereitung besteht aus einem Gemisch unterschiedlicher Effektpigmente um z.B. bestimmte Farbgebungen zu erzielen. Das Verhältnis SiO₂-Flakes zu Effektpigment beträgt 10:1 bis 1:10, vorzugsweise 1:1.

Zusätzlich zu den beschichteten oder unbeschichteten SiO₂-Flakes und den Effektpigmenten kann die erfindungsgemäße Pigmentzubereitung auch noch Rußteilchen, Fluoreszenz- und/oder organische Buntpigmente, Schichtsilikate, TiO₂, CaCO₃, CaSO₄, Kaolin enthalten. Vorzugsweise besteht die Zubereitung dann aus 30 - 100 Gew.% an SiO₂-Flakes und Effektpigmenten und 0 - 70 Gew.% an Rußteilchen, Fluoreszenz- und/oder Buntpigmenten.

Als weiteren wichtigen Bestandteil enthält die erfindungsgemäße Pigmentzubereitung ein Phosphatderivat in Mengen von 0,1 - 10 Gew.%, vorzugsweise 1 - 5 Gew.%. Geeignete Phosphatderivate sind z.B. die höheren und niedrigeren Polyphosphate sowie Pyrophosphate. Besonders bevorzugt sind die Alkalimetapolyphosphate, insbesondere das Natriumhexametapolyphosphat.

Die Herstellung der Pigmentzubereitung ist einfach und leicht zu handhaben. Zunächst wird das Pigmentgemisch mit einem Phosphatderivat gemischt, das entweder als feinkörniges Pulver eingerührt oder in Form einer Suspension bestehend aus Salz und einer flüssigen Komponente zugegeben wird. Als flüssige Komponente sind insbesondere Mineralöle oder andere nicht trocknende Öle, wie z.B. Cocosöl, geeignet, ferner trocknende Öle, wie z.B. Sojaöl oder Leinöl, sowie Wasser oder organische Lösemittel oder Lösemittelgemische. Die flüssige Komponente sollte dann maximal 30 Gew.% bezogen auf die Pigmentzubereitung betragen. Die Pigmentzubereitung kann auch hergestellt werden, indem man alle Komponenten gleichzeitig vorlegt und dann ohne große Scherkräfte miteinander mischt. Die fertige Pigmentzubereitung kann dann Formulierungen, wie z.B. Druckfarben, Lacke, Farben, Kunststoffen und kosmetischen Zubereitungen zugemischt werden.

Häufig empfiehlt es sich, in die Pigmentzubereitung noch ein Dispergier-und/oder Redispergiermittel einzurühren. Alle dem Fachmann bekannten Dispergiermittel können verwendet werden, z.B. wie sie in Karsten, Lackrohstofftabellen, 9. Auflage 1992, beschrieben werden. Insbesondere geeignet sind Dispergiermittel auf Basis von Polyacrylaten oder Polymethacrylaten. Die eingesetzte Menge an Dispergiermittel sollte nicht mehr als 10 Gew.% betragen, vorzugsweise 0,1 - 5 Gew. %.

Geeignete Redispergiermittel sind beispielsweise Schichtsilikate, vor allem solche aus der Gruppe der Smektitreihe, wie z.B. Montmorillonit-/Beidellit-Reihe. Die genannten Smectite zeichnen sich insbesondere durch ihr ausgeprägtes Quellverhalten aus. Im Handel werden diese Produkte z.B. unter der Marke Laponite, ein synthetisches Natrium-Magnesium-Lithium-Silikat, welches dem Hectorit ähnelt, von der Fa. Laporte UK oder von der Fa. Südchemie, BRD unter den Namen Optigel® CG, ein Bentonit, bzw. Tixogel® PE, ein organophiles hydrophobiertes Smectit, vertrieben. Es kommen aber auch glimmerartige Silikate der Vermiculit- und der Illitreihe sowie die Glimmer selbst (Muscovit, Phlogopit, Biotit) in Frage. Entscheidend ist die plättchenförmige Beschaffenheit der Partikel und ihre Aufschließbarkeit im Sprühtrockenprozeß. Bei der Oberflächenmodifizierung können auch Gemische der genannten Schichtsilikate sowie modifizierte Schichtsilikate eingesetzt werden. Vorzugsweise werden die Schichtsilikate in einer aktivierten Form eingesetzt, d.h., die Silikate werden in Wasser dispergiert, in ein Sol überführt und anschließend sprühgetrocknet.

Der Anteil an Redispergiermittel in der erfindungsgemäßen Pigmentzubereitung liegt bei 0,05 bis 5 Gew.%, vorzugsweise 0,1 bis 2,5 Gew.%, insbesondere 0,2 bis 1 Gew.%, bezogen auf den SiO₂/Effektpigment-Gehalt.

Die erfindungsgemäße Pigmentzubereitung eignet sich insbesondere zur Pigmentierung von Druckfarben. Derartig pigmentierte Druckfarben können für alle bekannten Drucktechniken, insbesondere für Offsetdruck, Hochdruck, Letterset, Tiefdruck, Flexodruck, Siebdruck, weiterhin für die Überdrucklackierung als auch für Beschichtungen eingesetzt werden. Bevorzugt wird sie für den Offsetdruck verwendet. Dabei kann sie sowohl für den Rollenoffsetdruck als auch den Bogenoffsetdruck im Trocken- und Naßverfahren verwendet werden; insbesondere geeignet ist sie jedoch für den Bogenoffsetdruck im Naßverfahren.

Die Dispergierung der Pigmentzubereitung in die Druckfarbe bzw. das Bindemittel erfolgt dann mit Hilfe eines Rührwerks mit Propeller- oder Flügelrührer, gegebenenfalls bei unterschiedlichen Dispergiertemperaturen. Dabei werden die Pigmentteilchen vom Bindemittel umhüllt. Die so erhaltenen Rohfarben werden anschließend mit den Additiven zum fertigen Produkt versetzt.

Für die Herstellung einer pigmentierten Offset-Druckfarbe können alle handelsüblichen Bindemittel verwendet werden. Derartige Bindemittel bestehen aus bekannten synthetischen oder natürlichen Harzen, gegebenenfalls trocknenden Ölen, Mineralölen und Additiven, wie sie beispielsweise in Karsten, Lackrohstofftabellen, 9. Auflage 1992, beschrieben werden. Vorzugsweise besitzen die verwendeten Harze eine relativ niedrige Schmelz- bzw. Lösemittelviskosität. Aber auch hochpolymerisierte und hochviskose Anteile können enthalten sein. Als besonders geeignet haben sich Kombinationen aus Hartharzen und Alkydharzen erwiesen, da diese die Glanzpigmente besser benetzen und glänzendere sowie reibechtere Drucke ergeben. Insbesondere werden Bindemittel verwendet, die aus 50 - 90 Gew.% Hartharz und 5 - 50 Gew.% Alkydharz zusammengesetzt sind. Bei den verwendeten Hartharzen handelt es sich vorzugsweise um Kohlenwasserstoffharze. Die verwendeten Kohlenwasserstoffharze können eine Säurezahl nahe 0 mg KOH/g Substanz haben, sie können aber auch modifiziert sein und Säurezahlen bis 30 mg KOH/g Substanz aufweisen. Weiterhin kann das Bindemittel 1 - 50 Gew.% eines Mineralöls enthalten. Die Farbanteile sind in einer Weise aufeinander abgestimmt, daß eine für die niedrige Farbviskosität geeignete und stabile Farb/ Wasser-Balance erreicht wird.

Die Trocknung der Druckfarbe erfolgt durch oxidative Polymerisation der Harze und durch Öle, wie z.B. Lein-, Holz- oder Rizinusöl, die beim Drucken in das Papier wegschlagen. Der Trocknungsvorgang kann durch Zusätze von Trocknungskatalysatoren (Sikkative), meist fettsaure Salze von Kobalt, Blei, Mangan, usw., weiter beschleunigt werden. Der Anteil an trocknenden Ölen in den erfindungsgemäßen Offset-Druckfarben liegt im Bereich von 0 - 50 Gew.%, vorzugsweise bei 0 - 30 Gew.%. Weitere Additive können in die Druckfarbe eingebracht werden, um die Farbeigenschaften für spezielle Anwendungen zu verändern. Diese Zusätze können Wachsverbindungen, Trocknungsmittel, Dispersionsmittel, Lösemittel, Verdicker, Gleitmittel, Pigmentfüllstoffe und/oder Antioxidantien sein. Weitere Details zu den grundsätzlichen Eigenschaften von Offset-Druckfarben finden sich in A. Rosenberg, Der Polygraph (11), 1153 (1987) bzw. B. Grande, Coating (4), 138 (1987).

Häufig ist bei den sehr niedrigviskosen pigmenthaltigen Druckfarben keine ausreichende Punktschärfe gegeben. Diese ist jedoch gerade in feinen Rastern erforderlich um ein Zusetzen des Drucks zu vermeiden. Es empfiehlt sich daher, die Druckfarbe mit Struktur zu versehen. So kann die Zugabe eines Strukturbildners die Punktschärfe ausreichend verbessern. Vorzugsweise enthält die erfindungsgemäße Druckfarbe dann 0,1 - 3 Gew.% eines Strukturbildners. Neben der verbesserten Punktschärfe zeigt eine derartig modifizierte Druckfarbe eine deutlich bessere Pigmentübertragung und bessere Fortdruckeigenschaften.

Durch die Wahl der Harze in den Bindemitteln und den Anteil an Glanzpigmenten in der Druckfarbe können die für den Druckprozeß ausschlaggebenden Parameter, wie Dispergierbarkeit, Zügigkeit und Viskosität, individuell eingestellt werden. Die Viskosität und die Zügigkeit sind bei gleichem Farbaufbau voneinander abhängig, können aber durch speziellen Farbaufbau auch gezielt einzeln verändert werden. Hierbei ist zu beachten, daß Druckfarben mit einem zu hohen Grad an Zügigkeit verursachen können, daß Teile des Papiers reißen (Rupfen). Farben mit ungenügender Zügigkeit werden nicht in geeigneter Weise bei dem Druckvorgang übertragen. Wenn das Eindringen der Farbe zu groß ist, wird die Farbe auf der entgegengesetzten Seite des Papiers sichtbar oder verursacht eine Fleckigkeit oder Undeutlichkeit der Abbildung. Eine schlecht kontrollierte Eindringung kann Verschmieren und Ablegen verursachen. Im Gegensatz dazu werden zu viskose Farben nicht in geeigneter Weise aus den Füllquellen zu den Walzen fließen. Die auf dem Markt befindlichen Druckfarben sind auf Viskosität im Bereich 12 - 200 Pa.s eingestellt. Druckfarben enthaltend die erfindungsgemäße Pigmentzubereitung können auf Viskositäten < 15 Pa.s, vorzugsweise < 12 Pa.s, insbesondere < 10 Pa.s, eingestellt werden. Die Druckfarbe zeigt dabei keinerlei Probleme mit dem Abspritzen von den Farbwalzwerken, auch nicht bei Druckgeschwindigkeiten von 10000 Bögen pro Stunde und mehr.

Druckfarben enthaltend die erfindungsgemäße Pigmentzubereitung sind insbesondere im Hinblick auf graphische Erzeugnisse der Werbebranche und bei hochwertigen Druckerzeugnissen von besonderer Bedeutung, da die fertigen Drucke aufgrund ihres Glanzes ästhetisch höchste Ansprüche erfüllen.

Gegenstand der Erfindung sind somit auch offset Druckfarben, die bis zu 40 Gew.%, insbesondere 10 - 30 Gew.%, der erfindungsgemäßen Pigmentzubereitung enthalten.

Die erfindungsgemäße Pigmentzubereitung ist ebenfalls als Vorprodukt für eine Effektpigment enthaltende Druckfarbe geeignet.

Die erfindungsgemäße Pigmentzubereitung kann für die Befüllung von Tuben sowie zum Strangpressen verwendet werden. Zur Herstellung von Trockenpräparaten wird die erfindungsgemäße Pigmentzubereitung stranggepreßt oder auf anderen dem Fachmann bekannten Wegen in Granulatform verdichtet und gegebenenfalls anschließend getrocknet. Der Trocknungsprozeß findet in der Regel bei Temperaturen von 20 °C bis 150 °C und dauert zwischen 0,5 und 4 h und kann ggf. unter reduziertem Druck erfolgen. Gegebenenfalls wird das Trockenpräparat in einem letzten Arbeitsgang zerkleinert. Die so erhaltenen Granulate, die bis zu 95 % Pigmente enthalten können, sind ebenfalls nichtstaubend und besitzen Teilchengrößen von 0,1-200 mm. Die Lagerung und der Transport der Trockenpräparate sind somit weniger eingeschränkt und daher sehr unproblematisch. Die Trockenpräparate besitzen den weiteren Vorteil, daß sie mit wenig oder keiner Flüssigkeit beladen sind und damit noch besser in Formulierungen eingearbeitet werden können.

Die erfindungsgemäße Pigmentzubereitung als Paste oder als Trockenpräparat kann für vielfältige Anwendungen verwendet werden. Bevorzugt wird sie in Beschichtungssystemen aus den Bereichen Druck, Lack und Farbe eingesetzt.

Die erfindungsgemäße Pigmentzubereitung zeichnet sich durch ihren hohen Glanz aus und kann daher für die verschiedensten Zwecke eingesetzt werden. Neben der Verwendung in Druckfarben kann sie weiterhin in Kunststoffen, Farben und Lacken Anwendung finden.

Gegenstand der Erfindung sind somit auch Formulierungen, die die erfindungsgemäße Pigmentzubereitung enthalten.

Die folgenden Beispiele sollen die Erfindung näher erläutern, ohne sie jedoch zu begrenzen.

### Beispiele

### Beispiel 1 - Vergleichsbeispiel

Zu 1800 g VE-Wasser werden bei 40 °C 200 g Laponite RDS (Produkt der Fa. Laporte, UK) unter Rühren bei 500 Upm zugegeben und bei 700 Upm 1 Stunde weitergerührt. Es entsteht ein Sol mit einer Viskosität von 12 Sek. 4 mm DIN-Becher.
Das Sol wird in einem Sprühtrockner Atomizer Minor der Fa. Niro mit einem theoretischen Durchsatz von 5-7 I/Stunde bei 95-100 °C und 4 bar getrocknet.
Eine Mischung aus 100 g Iriodin 123 Hellglanzsatin (TiO₂/GlimmerPigment der Teilchengröße 5-25 µm der Fa. Merck KGaA, BRD) und 150 g TiO₂ beschichtete SiO₂-Flakes der Teilchengröße 5-40 µm werden mit 3,8 g sprühgetrocknetem Laponite RDS trocken vermischt. Die Mischzeit beträgt 15 Minuten. Es entsteht ein homogenes Material.
39 g dieses homogenen Materials werden in 91 g eines Bindemittels Synthacryl SW175 (40%ige Acrylharzlösung in H₂O/Isopropanol 2:1) der Fa. Hoechst eingearbeitet und mit Isopropanol auf eine Auslaufzeit von 21 +/- 1 Sekunden gestellt. Der Pigmentgehalt beträgt 22,3 Gew.%.

Die Viskosität wird gemessen nach DIN 53211. Die Perlglanzfarbe setzt nur zu einem lockeren Sediment ab, das bei Bedarf leicht wiederaufrührbar ist.
Der Druck mit dieser Farbe ergibt hochglänzende Druckmuster mit einem sehr gleichmäßigen Ausdruck.

### Beispiel 2 - Vergleichsbeispiel

700 g Bogenoffsetbindemittel (Gebr. Schmidt Bronzefirnis 11A10342; Viskosität gemessen an Laray Fallstabviskosimeter ca. 24±2 Pa.s) werden in einem Rührgefäß mit Flügelrührer vorgelegt. Unter langsamen Rühren werden 320 g der Pigmentpräparation aus Vergleichsbeispiel 1 zugegeben. Dabei erwärmt sich die Mischung auf ca. 40°C. Wenn die Bestandteile homogen verteilt sind, wird die Farbe luftdicht verschlossen. Nach 24 h Lagerung wird die Viskosität und Zügigkeit der Farbe bestimmt:
Eta* = 20±4Pa.s (20 °C) Zügigkeit**: 120±10 (30°C)
   * Viskositätsbestimmung mit einem Laray Fallstabviskosimeter (Lhomary S.A.) in Anlehnung an DIN 53222. Verwendete Gewichte: 800, 600, 400, 200 g.
   ** Zügigkeitsmessung ,mit Tack-o-scope (Fa. Testprint B.V.); Walzengeschwindigkeit 100m/min.

Je nach Druckbedingungen wird mit weiterem Drucköl L der Firma BASF auf eine Viskosität von 10 Pa.s eingestellt.

Der Druck an einer Bogenoffsetmaschine Roland 200 ergibt einwandfreien Pigmentübertrag und Druckmuster mit einem exzellenten Perlglanzeffekt.

## Patentansprüche

1. Pigmentzubereitung im wesentlichen bestehend aus beschichteten und/oder unbeschichteten SiO₂-Flakes, mindestens einem Effektpigment, einem Phosphatderivat, wobei das Phosphatderivat in Mengen von 0,1-10 Gew.% enthalten ist, gegebenenfalls Rußteilchen, Fluoreszenzpigmenten, organische Buntpigmenten, Schichtsilikaten, CaCO₃, CaSO₄, TiO₂ und/oder Kaolin sowie ggf. Dispergier- und/oder Redispergier witteln.

2. Pigmentzubereitung nach Anspruch 1, **dadurch gekennzeichnet, dass** sie mit ein oder mehreren Metalloxiden und/oder Metallen beschichtete SiO₂-Flakes enthält.

3. Pigmentzubereitung nach Anspruch 1 oder 2, **dadurch gekennzeichnet, dass** das Effektpigment ein Perlglanzpigment oder ein beschichtetes oder unbeschichtetes Eisenoxid- bzw. Aluminiumplättchen ist.

4. Pigmentzubereitung nach Anspruch 1 oder 2, **dadurch gekennzeichnet, dass** das Effektpigment ein mit TiO₂ und/oder Fe₂O₃ beschichtetes Glimmerpigment, Glasflake, Keramikflake oder synthetisches trägerfreies Plättchen ist.

5. Pigmentzubereitung nach einem der Ansprüche 1 bis 4, **dadurch gekennzeichnet, dass** sie zusätzlich nicht mehr als 30 Gew.% einer flüssigen Komponente enhält.

6. Pigmentzubereitung nach einem der Ansprüche 1 bis 5, **dadurch gekennzeichnet, dass** es in Form eines weitgehend lösemittelfreien, rieselfähigen Granulats vorliegt.

7. Pigmentzubereitung nach einem der Ansprüche 1 bis 5, **dadurch gekennzeichnet, dass** sie in Beschichtungssystemen aus den Bereichen Druck, Lack und Farbe in Form von Pasten oder Trockenpräparaten eingesetzt werden.

8. Pigmentzubereitung nach einem der Ansprüche 1 bis 7, **dadurch gekennzeichnet, dass** sie in Form von Trockenpräparaten mit wenig oder keiner Flüssigkeit beladen sind.

9. Verwendung der Pigmentzubereitung nach Anspruch 1 in Druckfarben, Lacken, Farben, Kunststoffen und als Vorprodukt in Druckfarben.

10. Formulierungen enthaltend die Pigmentzubereitung nach Anspruch 1

11. Offset-Druckfarben enthaltend bis zu 50 Gew.% der Pigmentzubereitung nach Anspruch 1.

## Claims

1. Pigment composition essentially consisting of coated and/or uncoated SiO₂ flakes, at least one effect pigment, a phosphate derivative, where the phosphate derivative is present in amounts of 0.1-10% by weight, optionally carbon-black particles, fluorescent pigments, organic coloured pigments, phyllosilicates, CaCO₃, CaSO₄, TiO₂ and/or kaolin and optionally dispersants and/or redispersants.

2. Pigment composition according to Claim 1, **characterised in that** it comprises SiO₂ flakes coated with one or more metal oxides and/or metals.

3. Pigment composition according to Claim 1 or 2, **characterised in that** the effect pigment is a pearlescent pigment or a coated or uncoated iron oxide or aluminium platelet.

4. Pigment composition according to Claim 1 or 2, **characterised in that** the effect pigment is a TiO₂- and/or Fe₂O₃-coated mica pigment, glass flake, ceramic flake or synthetic support-free platelet.

5. Pigment composition according to one of Claims 1 to 4, **characterised in that** it additionally comprises not more than 30% by weight of a liquid component.

6. Pigment composition according to one of Claims 1 to 5, **characterised in that** it is in the form of substantially solvent-free, flowable granules.

7. Pigment composition according to one of Claims 1 to 5, **characterised in that** it is employed in coating systems from the areas of printing, paints and coatings in the form of pastes or dry preparations.

8. Pigment composition according to one of Claims 1 to 7, **characterised in that** it is in the form of dry preparations charged with little or no liquid.

9. Use of the pigment composition according to Claim 1 in printing inks, paints, coatings, plastics and as precursor in printing inks.

10. Formulations comprising the pigment composition according to Claim 1.

11. Offset printing inks comprising up to 50% by weight of the pigment composition according to Claim 1.

## Revendications

1. Composition de pigments qui est essentiellement constituée par des flocons de SiO₂ revêtus et/ou non revêtus, par au moins un pigment d'effet, par un dérivé de phosphate, où le dérivé de phosphate est présent selon des quantités de 0,1 à 10% en poids, en option par des particules de noir de charbon, par des pigments fluorescents, par des pigment organiques colorés, par des phyllosilicates, par du CaCO₃, par du CaSO₄, par du TiO₂ et/ou par du kaolin et en option, par des dispersants et/ou des redispersants.

2. Composition de pigments selon la revendication 1, **caractérisée en ce qu'**elle comprend des flocons de SiO₂ revêtus d'un ou de plusieurs oxydes métalliques et/ou métaux.

3. Composition de pigments selon la revendication 1 ou 2, **caractérisée en ce que** le pigment d'effet est un pigment perlescent ou une plaquette en oxyde de fer ou en aluminium revêtue ou non revêtue.

4. Composition de pigments selon la revendication 1 ou 2, **caractérisée en ce que** le pigment d'effet est un pigment de mica, un flocon de verre, un flocon de céramique ou une plaquette exempte de support synthétique revêtue de TiO₂ et/ou de Fe₂O₃.

5. Composition de pigments selon l'une quelconque des revendications 1 à 4, **caractérisée en ce qu'**elle comprend de façon additionnelle pas plus de 30% en poids d'un composant liquide.

6. Composition de pigments selon l'une quelconque des revendications 1 à 5, **caractérisée en ce qu'**elle est sous la forme de granules fluables sensiblement exempts de solvant.

7. Composition de pigments selon l'une quelconque des revendications 1 à 5, **caractérisée en ce qu'**elle est utilisée dans des systèmes de revêtement pris parmi les domaines de l'impression, des peintures et des revêtements sous la forme de pâtes ou de préparations à sec.

8. Composition de pigments selon l'une des revendications 1 à 7, **caractérisée en ce qu'**elle est sous la forme de préparations à sec chargées avec un peu de liquide ou pas de liquide.

9. Utilisation de la composition de pigments selon la revendication 1 dans des encres d'impression, des peintures, des revêtements, des matières plastiques et en tant que précurseur dans des encres d'impression.

10. Formulations comprenant la composition de pigments selon la revendication 1.

11. Encres d'impression offset comprenant jusqu'à 50% en poids de la composition de pigments selon la revendication 1.
